# EUROPÄISCHE PATENTSCHRIFT

(11) **EP 1 176 157 B1**
(45) Veröffentlichungstag und Bekanntmachung des Hinweises auf die Patenterteilung: **11.06.2003**
(21) Anmeldenummer: 01116666.7
(22) Anmeldetag: 16.07.2001
(51) Int. Cl.: C08F 36/06

(54) **Polybutadiene mit verringertem Verhältnis Lösungsviskosität/Mooney-Viskosität**
Polybutadiene with a decreased ratio between solution viscosity and Mooney viscosity
Polybutadiène avec un rapport reduit entre viscosité en solution et viscosité Mooney

(30) Priorität: 27.07.2000 DE 10037076
(43) Veröffentlichungstag der Anmeldung: 30.01.2002
(73) Patentinhaber: BAYER AG, 51368 Leverkusen (DE)
(72) Erfinder: Steinhauser, Norbert, Dr., 40789 Monheim (DE); Obrecht, Werner, Dr., 47447 Moers (DE)

(56) Entgegenhaltungen:
- EP-A- 0 007 027
- EP-A- 0 011 184

## Beschreibung

Die Erfindung betrifft ein Verfahren zur Herstellung von Polybutadienen mit verringertem Verhältnis Lösungsviskosität/Mooney-Viskosität durch Verwendung difunktioneller Diene, die in diesem Verfahren herstellbaren Polybutadiene, die Verwendung der erfindungsgemäßen Polybutadiene zur Herstellung von Kautschukmischungen, die Verwendung der Kautschukmischungen zur Herstellung von Formkörpern aller Art, sowie die Verbindung Dimethyldi-2,4-pentadienyl-(E,E)-silan als Zwischenprodukt fiir die Herstellung der erfindungsgemäßen Polybutadiene.

Polybutadien mit einem hohen Anteil an cis-1,4-Einheiten wird seit längerer Zeit in großtechnischem Maßstab produziert und für die Herstellung von Reifen und anderen Gummiwaren, sowie zur Schlagzähmodifizierung von Polystyrol eingesetzt.

Zur Erzielung hoher Anteile an cis-1,4-Einheiten werden derzeit fast ausschließlich Katalysatoren auf Basis von Verbindungen der Seltenen Erden, wie in EP-A1-0011 184 und EP-A1-0 007 027 beschrieben, eingesetzt.

Neben den vielen technischen Vorteilen haben jedoch die kommerziell verfügbaren Polybutadiene mit hohen Anteilen an cis-1,4-Einheiten, insbesondere Polybutadiene hergestellt mit Katalysatoren auf Basis der Seltenen Erden, den Nachteil, dass sie eine relativ hohe Lösungsviskosität bezogen auf die Mooney-Viskosität besitzen. Dies ist nachteilig bei der Herstellung und Verarbeitung der Polybutadiene und fiir den Einsatz dieser Polybutadiene als Schlagzähmodifikatoren für Thermoplaste.

Es bestand also die Aufgabe, besser verarbeitbare Polybutadiene bereitzustellen. Eine weitere Aufgabe war Polybutadiene bereitzustellen, die Vorteile bieten beim Einsatz als Schlagzähmodifikatoren für Thermoplaste.

Diese Aufgabe wird erfindungsgemäß gelöst durch ein Verfahren zur Polymerisation von Dienen, dadurch gekennzeichnet, dass man als Co-Monomere Polydienyl-Verbindungen einsetzt.

Polydienyl-Verbindungen im Sinne der Erfindung sind hierbei Kondensationsprodukte von Dienen der allgemeinen Formel

R_{z-y}-X-(-CR₂-CR=CR-CR=CR)_{y} (I),

wobei
- R: jeweils unabhängig voneinander für einen Rest ausgewählt aus der Gruppe H, C₁-C₂₀-Alkyl, C₆-C₂₀-Aryl und C₇-C₂₀-Alkylaryl steht, der seinerseits einfach- oder mehrfach ungesättigt oder gesättigt sein kann,
- X: fiir ein Element aus der Gruppe C, Si, Ge, Sn, B, Al, N, P, O, S steht, insbesondere fiir C oder Si, oder für eine
mehrfach substituierte Alkyl- oder Arylverbindung wie -(CR₂)ₙ-, O-(CR₂)ₙ-O-, C₆R₄, -O-Aryl-O-, steht,
wobei
z die zur Absättigung der Valenzen von X notwendige Zahl an Substituenten darstellt,
R die gleiche Bedeutung wie oben hat und
- y: für eine ganze Zahl größer 2 steht und nicht größer als z ist, oder ist y=2,
steht.

Bevorzugte Polydienyl-Verbindungen sind Dimethyldi-2,4-pentadienylsilan, Methyltri-2,4-pentadienylsilan und Tetra-2,4-pentadienylsilan.

Polydienyl-Verbindungen lassen sich durch dem Fachmann bekannte Techniken herstellen.

Eine bevorzugte Polydienyl-Verbindung Dimethyldi-2,4-pentadienyl-(E,E)-silan lässt sich vorteilhaft aus einem 1,3-Pentadien enthaltenden technischen Gemisch durch Umsetzung mit Butyllithium/Kalium-tert.-butylat, Kopplung mit Dimethyl-dichlorsilan und anschließender Destillation herstellen (vgl. Beispiel 1). Dimethyldi-2,4-pentadienyl-(E,E)-silan stellt als Zwischenprodukt einen weiteren Gegenstand der Erfindung dar.

Es ist trivial, dass auch verschiedene Polydienyl-Verbindungen im Gemisch eingesetzt werden können.

Das Mol-Verhältnis der Polydienyl-Verbindungen zu den herkömmlichen Dienen liegt in der Regel im Bereich von 1:10 bis 1:20 000, vorteilhaft 1:50 bis 1:10 000, besonders bevorzugt 1:100 bis 1:5 000.

Herkömmliche Diene im Sinne der Erfindung sind sämtliche dem Fachmann bekannte Diene, die in Bezug auf Polybutadien eingesetzt worden sind, insbesondere 1,3-Butadien, 1,2-Butadien, Isopren, Pentadien und 2,3-Dimethylbutadien.

Als Katalysatoren eignen sich für die Polymerisation der Dienc und Polydienyl-Verbindungen insbesondere die dem Fachmann bekannten Katalysatorsysteme basierend auf den Seltenen Erden bestehend aus
A) einem Alkoholat der Seltenen Erden (II),
   einem Carboxylat der Seltenen Erden (III),
   einer Komplexverbindung der Seltenen Erden mit Diketonen (IV) und/oder einer Additionsverbindung der Halogenide der Seltenen Erden mit einer Sauerstoff- oder Stickstoff-Donator-Verbindung (V) folgender Formeln:

   (RO)₃M (II), (R-CO₂)₃M (III),

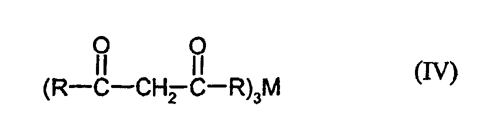

   und MX₃ · m Donator (V),
B) einem Aluminiumtrialkyl, einem Dialkylaluminiumhydrid und/oder einem Alumoxan der Formeln (VI) bis (IX):

   AIR₃ (VI), HAlR₂ (VII),

   wobei in den Formeln 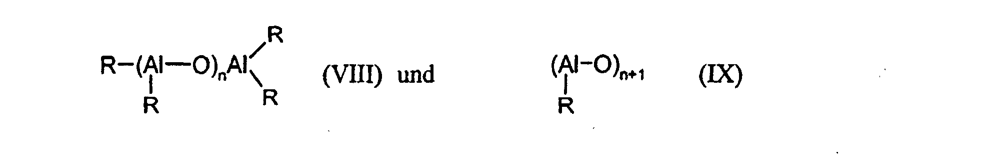
   - M: ein dreiwertiges Element der Seltenen Erden mit den Ordnungszahlen 57 bis 71 bedeutet,
   - R: gleich oder verschieden ist und Alkylreste mit 1 bis 10 Kohlenstoffatomen bedeutet,
   - X: fiir Chlor, Brom oder Iod steht,
   - m: 1 bis 6 bedeutet und
   - n: 1 bis 50 bedeutet,
C) und wenigstens einer weiteren Lewissäure.

Bevorzugt werden solche Verbindungen A), in denen M Lanthan, Cer, Praseodym oder Neodym bzw. ein Gemisch von Elementen der Seltenen Erden, welches mindestens eines der Elemente Lanthan, Cer, Praseodym oder Neodym zu wenigstens 10 Gew.-% enthält, bedeutet.

Besonders bevorzugt werden Verbindungen A), in denen M Lanthan oder Neodym bzw. ein Gemisch von Seltenen Erden, welches Lanthan oder Neodym zu mindestens 30 Gew.-% enthält, bedeutet.

Beispiele fiir geeignete Carboxylate der Seltenen Erden sind:
Lanthan-tris-(2,2-diethyl-hexanoat), Praseodym-tris(2,2-diethyl-hexanoat), Neodymtris(2,2-diethyl-hexanoat), Lanthan-tris(2,2-diethyl-heptanoat), Praseodym-tris(2,2-diethyl-heptanoat), Neodym-tris(2,2-diethyl-heptanoat), Lanthanversaticat (Lanthansalz der Versatic-Säure, Handelsprodukt der Shell Chemie), Praseodymversaticat und Neodymversaticat, Lanthannaphthenat, Praseodymnaphthenat, Neodymnaphthenat.

Beispiele für geeignete Aluminiumalkyle B) sind:

Trimethylaluminium, Triethylaluminium, Tri-n-propylaluminium, Triisopropylaluminium, Tri-n-butylaluminium, Triisobutylaluminium, Tripentylaluminium, Trihexylaluminium, Tricyclohexylaluminium, Trioctylaluminium, Diethylaluminiumhydrid, Di-n-butylaluminiumhydrid und Di-iso-butylaluminiumhydrid.

Bevorzugt werden Triethylaluminium, Triisobutylaluminium und Diisobutylaluminiumhydrid.

Als Komponente C werden sogenannte Lewis-Säuren eingesetzt.

Beispielhaft seien die Organometallhalogenide erwähnt, in denen das Metallatom der Gruppe 2 oder 13, 14 oder 15 des Periodensystems gemäß IUPAC 1985 angehört sowie Halogenide der Elemente der Gruppe 15 des Periodensystems gemäß IUPAC 1985, wie Methylaluminiumdibromid, Methylaluminiumdichlorid, Ethylaluminiumdibromid, Ethylaluminiumdichlorid, Butylaluminiumdibromid, Butylaluminiumdichlorid, Dimethylaluminiumbromid, Dimethylaluminiumchlorid, Diethylaluminiumbromid, Diethylaluminiumchlorid, Dibutylaluminiumbromid, Dibutylaluminiumchlorid, 1-Methylaluminiumsesquibromid, Methylaluminiumsesquichlorid, Ethylaluminiumsesquibromid, Ethylaluminiumsesquichlorid, Dibutylzinndichlorid, Aluminiumtribromid, Antimontrichlorid, Antimonpentachlorid, Phosphortrichlorid, Phosphorpentachlorid, Zinntetrachlorid.

Bevorzugt werden Diethylaluminiumchlorid, Ethylaluminiumsesquichlorid, Ethylaluminiumdichlorid, Diethylaluminiumbromid, Ethylaluminiumsesquibromid und Ethylaluminiumdibromid.

Als Komponente C können auch die Reaktionsprodukte von Alkylaluminiumverbindungen mit Halogenen, z.B. Triethylaluminium und Brom eingesetzt werden, sowie Alkylhalogenide, Arylhalogenide, Arylalkylhalogenide und Chlorsilane.

Das Molverhältnis, in dem die Katalysatorkomponenten angewendet werden, kann in weiten Grenzen variiert werden.

Das Molverhältnis der Komponente A zur Komponente B beträgt 1:1 bis 1:100, bevorzugt 1:3 bis 1:80 und besonders bevorzugt 1:3 bis 1:50. Das Molverhältnis der Komponente A zur Komponente C beträgt 1:0,4 bis 1:15, bevorzugt 1:0,5 bis 1:8.

Die Polymerisation wird in organischen Lösungsmitteln ausgeführt. Diese Lösungsmittel müssen inert gegenüber dem verwendeten Katalysatorsystem sein. Geeignet sind z.B. aromatische, aliphatische und cycloaliphatische Kohlenwasserstoffe wie Benzol, Toluol, Pentan, n-Hexan, iso-Hexan, Heptan und Cyclohexan.

Die Polymerisation kann sowohl kontinuierlich als auch diskontinuierlich durchgeführt werden.

Die Polymerisation wird bei einer Temperatur zwischen -20 und 150°C, bevorzugt zwischen 0 und 120°C, durchgeführt.

In einer üblichen Ausführungsform werden die Komponenten A, B und C einer Mischung von 100 Gew.-Teilen Lösungsmittel mit 5 bis 50 Gew.-Teilen, bevorzugt 8 bis 30 Gew.-Teilen Monomer zugesetzt.

Nach Erreichen des gewünschten Umsatzes wird der Katalysator durch Zusatz geringer Mengen beispielsweise an Wasser, Carbonsäuren oder Alkoholen desaktiviert.

Der Polymerlösung können vor der Aufarbeitung übliche Stabilisatoren in üblichen Mengen zugesetzt werden. Als Stabilisatoren werden z.B. sterisch gehinderte Phenole oder aromatische Amine oder Phosphite wie z.B. 2,6-Di-tert.Butyl-4,5-methylphenol verwendet.

Die Isolierung der Polymeren erfolgt durch Eindampfen der Polymerlösung, durch Fällen mit einem Nichtlösungsmittel wie beispielsweise Methanol, Ethanol, Aceton oder bevorzugt durch Wasserdampfdestillation des Lösungsmittels.

Nach dem Strippen mit Wasserdampf erfolgt die Wasserentfernung mit geeigneten Sieb- oder Schneckenaggregaten wie Expeller- bzw. Expander-Schnecken oder Fließbetttrockner.

Die Trocknung erfolgt nach den üblichen Verfahren, z.B. im Trockenschrank oder in einem Schneckentrockner.

Beim Einsatz der erfindungsgemäßen Polydienyl-Verbindungen kann es zu einer unerwünschten Erhöhung der Mooney-Viskosität kommen, die sich jedoch leicht durch eine erhöhte Zugabe an B), insbesondere Diisobutylaluminiumhydrid oder an A) ausgleichen lässt. Die notwendige Menge an zusätzlichem B) richtet sich nach der angestrebten Mooney-Viskosität des Endproduktes und lässt sich durch wenige Vorversuche leicht ermitteln.

Weiterhin kann es vorteilhaft sein, die Katalysatoren vor dem Einsatz zu präformieren. Hierbei werden die Katalysatorbestandteile A), B) und C) unter Zugabe von im Bereich von 1 Teilen bis zu 100 Teilen Dien pro Teil A) gemischt und für mehrere Minuten bis mehreren Tagen gegebenenfalls unter zeitweiser Abkühlung auf 10 bis -80°C gelagert, bevor das System zur Polymerisationslösung gegeben wird. So bekommt man den präformierten katalysator auf Basis der Seltenen Erden des Anspruchs 4.

Polybutadien, insbesondere hergestellt mit Katalysatoren der Seltenen Erden, mit einem verringerten Verhältnis Lösungsviskosität (LV) zu Mooney-Viskosität (MV) wobei gleichzeitig der Cold-flow geringe Werte in Bezug auf die Lösungsviskosität aufweist, hat Vorteile beim Herstellungsprozess, beim Transport, der Lagerung und der Verarbeitung.

Üblicherweise liegt bei herkömmlichem Nd-Polybutadien das Verhältnis Lösungsviskosität (LV) zu Mooney-Viskosität (MV) im Bereich von 5 bis 30. Bei den erfindungsgemäßen Polybutadienen liegt das Verhältnis Lösungsviskosität (LV) zu Mooney-Viskosität (MV) im Bereich von 0,5 bis 15.

Des weiteren eignen sich die erfindungsgemäßen Polybutadiene fiir die Schlagzähmodifizierung von Kunststoffen.

Daher stellen die im erfindungsgemäßen Verfahren herstellbaren Polybutadiene einen weiteren Gegenstand der Erfindung dar.

Die erfindungsgemäßen Polybutadiene können alleine, im Verschnitt mit aromatischen oder aliphatischen Ölen oder im Gemisch mit anderen Kautschuken verwendet werden. Für die Herstellung von Kautschukvulkanisaten eignen sich als zusätzliche Kautschuke neben Naturkautschuk auch Synthesekautschuke. Bevorzugte Synthesekautschuke sind beispielsweise bei W. Hofmann, Kautschuktechnologie, Gentner Verlag, Stuttgart 1980 und I. Franta, Elastomers and Rubber Compounding Materials, Elsevier, Amsterdam 1989 beschrieben. Sie umfassen u.a.
- BR -: herkömmliches Polybutadien
- ABR -: Butadien/Acrylsäure-C₁-C₄-alkylester-Copolymere
- CR: Polychloropren
- IR -: Polyisopren
- SBR -: Styrol/Butadien-Copolymerisate mit Styrolgehalten von 1 bis 60, vorzugsweise 20 bis 50 Gew.-%
- IIR -: Isobutylen/Isopren-Copolymerisate
- NBR -: Butadien/Acrylnitril-Copolmere mit Acrylnitrilgehalten von 5 bis 60, vorzugsweise 10 bis 40 Gew.-%
- HNBR -: teilhydrierter oder vollständig hydrierter NBR-Kautschuk
- EPDM -: Ethylen/Propylen/Dien-Copolymerisate
sowie Mischungen dieser Kautschuke. Für die Herstellung von Kfz-Reifen mit Hilfe der oberflächenmodifizierten Füllstoffe sind insbesondere Naturkautschuk, Emulsions-SBR sowie Lösungs-SBR-Kautschuke mit einer Glastemperatur oberhalb von -50°C, die gegebenenfalls mit Silylethern oder anderen funktionellen Gruppen, modifiziert sein können, wie in der EP-A-0 447 066 beschrieben, Polybutadienkautschuk mit hohem 1.4-cis-Gehalt (>90 %), der mit Katalysatoren auf Basis Ni, Co, Ti oder Nd hergestellt wird, sowie Polybutadienkautschuk mit einem Vinylgehalt von 0 bis 75 % sowie deren Mischungen von Interesse.

Die Kautschukmischungen stellen einen weiteren Gegenstand der Erfindung dar und enthalten in der Regel 5 bis 300 Gew.-Teile eines aktiven oder inaktiven Füllstoffs, wie z.B.
- hochdisperse Kieselsäuren, hergestellt z.B. durch Fällung von Lösungen von Silikaten oder Flammenhydrolyse von Siliciumhalogeniden mit spezifischen Oberflächen von 5 bis 1000, vorzugsweise 20 bis 400 m²/g (BET-Oberfläche) und mit Primärteilchengrößen von 10 bis 400 nm. Die Kieselsäuren können gegebenenfalls auch als Mischoxide mit anderen Metalloxiden, wie Al-, Mg-, Ca-, Ba-, Zn-, Zr-, Ti-oxiden vorliegen,
- synthetische Silikate, wie Aluminiumsilikat, Erdalkalisilikat wie Magnesiumsilikat oder Calciumsilikat, mit BET-Oberflächen von 20 bis 400 m²/g und Primärteilchendurchmessern von 10 bis 400 nm,
- natürliche Silikate, wie Kaolin und andere natürlich vorkommende Kieselsäure,
- Glasfasern und Glasfaserprodukte (Matten, Stränge) oder Mikroglaskugeln,
- Metalloxide, wie Zinkoxid, Calciumoxid, Magnesiumoxid, Aluminiumoxid,
- Metallcarbonate, wie Magnesiumcarbonat, Calciumcarbonat, Zinkcarbonat,
- Metallhydroxide, wie z.B. Aluminiumhydroxid, Magnesiumhydroxid,
- Ruße. Die hierbei zu verwendenden Ruße sind nach dem Flammruß, Fumaceoder Gasrußverfahren hergestellt und besitzen BET-Oberflächen von 20 bis 200 m²/g, wie z.B. SAF-, ISAF-, HAF-, FEF- oder GPF-Ruße.
- Kautschukgele, insbesondere solche auf Basis Polybutadien, Butadien/Styrol-Copolymere, Butadien/Acrylnitril-Copolymere und Polychloropren.

Besonders bevorzugt werden hochdisperse Kieselsäuren und Ruße.

Die genannten Füllstoffe können alleine oder im Gemisch eingesetzt werden. In einer besonders bevorzugten Ausführungsform enthalten die Kautschukmischungen als Füllstoffe ein Gemisch aus hellen Füllstoffen, wie hochdispersen Kieselsäuren, und Rußen, wobei das Mischungsverhältnis von hellen Füllstoffen zu Rußen bei 0,05 bis 20, bevorzugt 0,1 bis 10 liegt.

Die Füllstoffe werden bevorzugt als Feststoffe oder als Aufschlämmung in Wasser oder einem Lösungsmittel zur Lösung des/der erfindungsgemäßen Polybutadiene hinzugegeben. Die Kautschuklösung kann vorher hergestellt werden, bevorzugt wird aber die aus der Polymerisation stammende Lösung direkt eingesetzt. Anschließend wird das Lösungsmittel thermisch oder bevorzugt mit Hilfe von Dampf entfernt. Die Bedingungen dieses Stripp-Prozesses lassen sich leicht durch Vorversuche ermitteln.

Weiterhin bevorzugt werden die Füllstoffe zum festen erfindungsgemäßen Polybutadien oder einem Gemisch aus Kautschuken hinzugegeben und auf bekannte Weise, z.B. mit einem Kneter, eingemischt.

Die erfindungsgemäßen Kautschukmischungen enthalten gegebenenfalls weiterhin Vemetzer. Als Vernetzer können Schwefel oder Peroxide eingesetzt werden, wobei Schwefel besonders bevorzugt wird. Die erfindungsgemäßen Kautschukmischungen können weitere Kautschukhilfsprodukte enthalten, wie Reaktionsbeschleuniger, Alterungsschutzmittel. Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren wie Triethanolamin, Polyethylenglykol, Hexantriol etc. die der Gummiindustrie bekannt sind.

In den bevorzugten Kautschukmischungen mit hochaktiven gefällten Kieselsäuren ist die Verwendung von zusätzlichen Füllstoffaktivatoren besonders vorteilhaft. Bevorzugte Füllstoffaktivatoren sind schwefelhaltige Silylether, insbesondere Bis-(trialkoxisilyl-alkyl)-polysulfide, wie in DE-A-2.141.159 und DE-A-2.255.577 beschrieben, oligomere und/oder polymere schwefelhaltige Silylether der DE-A-4.435.311 und EP-A-0 670 347, Mercaptoalkyltrialkoxisilane, insbesondere Mercaptopropyltriethoxisilan und Thiocyanatoalkylsilylether, wie z.B. in DE-A-195 44 469 beschrieben.

Die Kautschukhilfsmittel werden in üblichen Mengen, die sich unter anderem nach dem Verwendungszweck richten, eingesetzt. Übliche Mengen sind z.B. Mengen von 0,1 bis 50 Gew.-%, bezogen auf Kautschuk.

Die weitere Abmischung der Kautschuke mit den anderen erwähnten Kautschukhilfsprodukten, Vernetzern und Beschleunigem kann in üblicher Weise mit Hilfe von geeigneten Mischaggregaten, wie Walzen, Innenmischer und Mischextruder, durchgeführt werden.

Die Compoundierung und Vulkanisation wird beispielsweise näher in Encyclopedia of Polymer Science and Engineering, Vol. 4, S. 66 ff (Compoundierung) und Vol. 17, S. 666 ff (Vulkanisation) beschrieben.

Die Vulkanisation der erfindungsgemäßen Kautschukmischungen kann bei üblichen Temperaturen von 100 bis 200°C, bevorzugt 130 bis 180°C (gegebenenfalls unter Druck 10 bis 200 bar), erfolgen.

Die erfindungsgemäßen Kautschukmischungen eignen sich hervorragend zur Herstellung von Formkörpern aller Art.

Nichtlimitierende Beispiele dieser Formkörper sind O-Ringe, Profile, Dichtungen, Membranen, Reifen, Reifenlaufflächen, Dämpfelemente und Schläuche.

Besonders bevorzugt werden verschiedene Reifenbauteile und Reifenlaufflächen.

Weiterhin eignen sich die erfindungsgemäßen Kautschukmischungen zur Schlagzähmodifikation von Thermoplasten, insbesondere für Polystyrol und Styrol-/Acrylnitrilcopolymere.

Die Erfindung wird an Hand folgender Ausführungsbeispiele veranschaulicht:

### Beispiele

### Beispiel 1: Synthese von Dimethyl-di-2,4-pentadienyl-(E,E)-silan

In einem trockenen, mit Argon inertisierten Schlenkgefäß wurden 55,7 g (496 mmol) Kalium-tert-butanolat in 240 mL Pentan suspendiert. Die Suspension wurde mit Aceton/Trockeneis abgekühlt und mit 310 mL (496 mmol) 1,6-molarem Butyllithium in Hexan sowie 59 mL (545 mmol) eines technischen Pentadiens (90 % 1,3-Pentadien als Isomerengemisch aus cis- und trans-1,3-Pentadien) versetzt. Die Mischung wurde auf Raumtemperatur erwärmt und anschließend 30 min bei Raumtemperatur gerührt. Anschließend wurde wiederum mit Aceton/Trockeneis gekühlt und es wurden 34 mL (281 mmol) Dimethyldichlorsilan zugegeben. Es wurde auf Raumtemperatur erwärmt und 30 min bei Raumtemperatur gerührt. Danach wurde mit Eiswasser gekühlt. Die Suspension wurde mit 200 mL einer 2,5-molaren wässrigen NaOH-Lösung versetzt, die beiden Phasen durch kräftiges Rühren durchmischt, die organische Phase abgetrennt, mit 200 mL Wasser versetzt und gerührt, die organische Phase wiederum abgetrennt und mit Na₂SO₄ getrocknet. Durch Anlegen von Vakuum wurde das Lösungsmittel von der organischen Phase abgetrennt und diese dann bei 90°C im Vakuum destilliert. Es wurden 16,85 g einer klaren, farblosen, leicht viskosen Flüssigkeit erhalten.
¹H-NMR in CDCl₃ (400 MHz): 0,00 (s, 6H), 1,58 (d, 4H), 4,85 (d, 2H), 5,00 (d, 2H), 5,69 (m, 2H), 5,92 (dd, 2H), 6,28 (m, 2H).

### Beispiel 2: Polymerisation von Butadien ohne Katalysatorpräformierung

Ein trockener, mit Argon inertisierter 1,9 L-Glasautoklav wurde mit 479,4 g Hexan (über Molsieb getrocknet) sowie 1,8 mL (1,8 mmol) einer 1-molaren Lösung von Diisobutylaluminiumhydrid in Hexan, 3,0 mL (0,15 mmol) einer 0,05-molaren Lösung von Neodymversatat in Hexan, 3,0 mL (0,15 mmol) einer 0,05-molaren Lösung von Ethylaluminiumsesquichlorid in Hexan und 100,3 g Butadien befüllt. Es wurde auf 65°C erwärmt und unter Rühren 2h polymerisiert. Anschließend wurden 340,5 g der viskosen Lösung abgelassen, und es wurden 2 mL Methanol sowie 0,6 g Bis[3-^{t}butyl-2-hydroxy-5-methylphenyl]methan eingerührt. Danach wurde das Polymer bei 70°C im Vakuum getrocknet.
Auswaage nach dem Trocknen: 57,7 g
Lösungsviskosität (5,43 % in Toluol, bei Raumtemperatur): 770 mPas
Mooney-Viskosität (ML 1+4 bei 100°C): 46 MU
Cold-Flow (50°C): 9,1 mg/min

### Beispiel 3: Copolymerisation von Butadien und Dimethyl-di-2,4-pentadienyl-(E,E)-silan ohne Katalysatorpräformierung

Ein trockener, mit Argon inertisierter 1,9 L-Glasautoklav wurde mit 499,2 g Hexan (über Molsieb getrocknet) sowie 3,6 mL (3,6 mmol) einer 1-molaren Lösung von Diisobutylaluminiumhydrid in Hexan, 3,0 mL (0,15 mmol) einer 0,05-molaren Lösung von Neodymversatat in Hexan, 3,0 mL (0,15 mmol) einer 0,05-molaren Lösung von Ethylaluminiumsesquichlorid in Hexan, 1,8 mL (1,8 mmol) einer 1-molaren Lösung von Dimethyl-di-2,4-pentadienyl-(E,E)-silan in Hexan und 100,0 g Butadien befüllt. Es wurde auf 65°C erwärmt und unter Rühren 2h polymerisiert. Anschließend wurden 517,9 g der viskosen Lösung abgelassen, und es wurden 2 mL Methanol sowie 0,6 g Bis[3-^{t}butyl-2-hydroxy-5-methylphenyl]methan eingerührt. Danach wurde das Polymer bei 70°C im Vakuum getrocknet.
Auswaage nach dem Trocknen: 79,2 g
Lösungsviskosität (5,43 % in Toluol, bei Raumtemperatur): 330 mPas
Mooney-Viskosität (ML 1+4 bei 100°C): 41 MU
Cold-Flow (50°C): 4,9 mg/min

### Beispiel 4: Polymerisation von Butadien mit Katalysatorpräformierung

### Katalysatorpräformierung:

In ein trockenes, mit Argon inertisiertes Schlenkgefäß wurden 6,4 mL (36 mmol) Diisobutylaluminiumhydrid, 1,2 mL (12 mmol) Isopren, sowie 11,3 mL (3 mmol) einer 0,265-molaren Lösung von Neodymversatat in Hexan eingebracht. Es wurde 90 min bei 50°C gerührt. Anschließend wurde auf 5°C abgekühlt und es wurden 8 mL (2 mmol) einer 0,25-molaren Lösung von Ethylaluminiumsesquichlorid in Hexan zugegeben. Die präformierte Katalysatorlösung wurde über Nacht bei Raumtemperatur stehen gelassen und dann fiir die Polymerisation eingesetzt.

### Polymerisation:

Ein trockener, mit Argon inertisierter 1,9 L-Glasautoklav wurde mit 582,6 g Hexan (über Molsieb getrocknet) sowie 0,54 mL (0,54 mmol) einer 1-molaren Lösung von Triisobutylaluminium in Hexan, 1,63 mL (0,18 mmol Nd) der oben beschriebenen präformierten Katalysatorlösung und 120,2 g Butadien befüllt. Es wurde auf 65°C erwärmt und unter Rühren 2 h polymerisiert. Anschließend wurden 613,2 g der viskosen Lösung abgelassen, und es wurden 2 mL Methanol sowie 0,6 g Bis[3-'butyl-2-hydroxy-5-methylphenyl]methan eingerührt. Danach wurde das Polymer bei 70°C im Vakuum getrocknet.
Auswaage nach dem Trocknen: 101,8 g
Lösungsviskosität (5,43 % in Toluol, bei Raumtemperatur): 290 mPas
Mooney-Viskosität (ML 1+4 bei 100°C): 45 MU
Cold-Flow (50°C): 22,2 g/min

### Beispiel 5a: Copolymerisation von Butadien und Dimethyl-di-2,4-pentadienyl-(E,E)-silan mit Katalysatorpräformierung

### Katalysatorpräformierung:

In ein trockenes, mit Argon inertisiertes Schlenkgefäß wurden 7,5 mL (42 mmol) Diisobutylaluminiumhydrid, 1,2 mL (12 mmol) Isopren, sowie 11,3 mL (3 mmol) einer 0,265-molaren Lösung von Neodymversatat in Hexan eingebracht. Es wurde 90 min bei 50°C gerührt. Anschließend wurde auf 5°C abgekühlt und es wurden 8 mL (2 mmol) einer 0,25-molaren Lösung von Ethylaluminiumsesquichlorid in Hexan zugegeben. Die präformierte Katalysatorlösung wurde über Nacht bei Raumtemperatur stehen gelassen und dann fiir die Polymerisation eingesetzt.

### Polymerisation:

Ein trockener, mit Argon inertisierter 1,9 L-Glasautoklav wurde mit 502,7 g Hexan (über Molsieb getrocknet) sowie 3,1 mL (3,1 mmol) einer 1-molaren Lösung von Diisobutylaluminiumhydrid in Hexan, 0,9 mL (4,2 mmol) Dimethyl-di-2,4-pentadienyl-(E,E)-silan, 1,5 mL (0,16 mmol Nd) der oben beschriebenen präformierten Katalysatorlösung und 106,2 g Butadien befüllt. Es wurde auf 65°C erwärmt und unter Rühren 3 h polymerisiert. Anschließend wurden 541,3 g der viskosen Lösung abgelassen, und es wurden 2 mL Methanol sowie 0,6 g Bis[3-^{t}butyl-2-hydroxy-5-methylphenyl]methan eingerührt. Danach wurde das Polymer bei 70°C im Vakuum getrocknet.
Auswaage nach dem Trocknen: 92,1 g
Lösungsviskosität (5,43 % in Toluol, bei Raumtemperatur): 85 mPas
Mooney-Viskosität (ML 1+4 bei 100°C): 39 MU
Cold-Flow (50°C): 6,7 mg/min

### Beispiel 5b: Copolymerisation von Butadien und Dimethyl-di-2,4-pentadienyl-(E,E)-silan mit Katalysatorpräformierung

### Katalysatorpräformierung:

Ist in Beispiel 5a beschrieben.

### Polymerisation:

Ein trockener, mit Argon inertisierter 1,9 L-Glasautoklav wurde mit 509,7 g Hexan (über Molsieb getrocknet) sowie 2,2 mL (2,2 mmol) einer 1-molaren Lösung von Diisobutylaluminiumhydrid in Hexan, 0,9 mL (4,2 mmol) Dimethyl-di-2,4-pentadienyl-(E,E)-silan, 1,5 mL (0,16 mmol Nd) der oben beschriebenen präformierten Katalysatorlösung und 106,6 g Butadien befüllt. Es wurde auf 65°C erwärmt und unter Rühren 4h polymerisiert. Anschließend wurden 510,5 g der viskosen Lösung abgelassen, und es wurden 2 mL Methanol sowie 0,6 g Bis[3-^{t}butyl-2-hydroxy-5-methylphenyl]methan eingerührt. Danach wurde das Polymer bei 70°C im Vakuum getrocknet.

Auswaage nach dem Trocknen: 89,8 g
Lösungsviskosität (5,43 % in Toluol, bei Raumtemperatur): 190 mPas
Mooney-Viskosität (ML 1+4 bei 100°C): 80 MU
Cold-Flow (50°C): 1,2 mg/min

| **Beispiel** | **Katalysator** | **Monomere** | **Polymereigenschaften** | | |
|---|---|---|---|---|---|
| | | | Lösungs-viskosität ^{a)} | Mooney-Viskosität ^{b)} | Cold-Flow^{c)} |
| **2** | ohne Präformierung | 1,3-Butadien | 770 mPas | 46 MU | 9,1 mg/min |
| **3** | ohne Präformierung | 1,3-Butadien, Dimethyl-di-2,4-pentadienyl-(E,E)-silan | 330 mPas | 41 MU | 4,9 mg/min |
| **4** | mit Präformierung | 1,3-Butadien | 290 mPas | 45 MU | 22,2 mg/min |
| **5a** | mit Präformierung | 1,3-Butadien, Dimethyl-di-2,4-pentadienyl-(E,E)-silan | 85 mPas | 39 MU | 6,7 mg/min |
| **5b** | mit Präformierung | 1,3-Butadien, Dimethyl-di-2,4-pentadienyl-(E,E)-silan | 190 mPas | 80 MU | 1,2 mg/min |

| | | | | | |
|---|---|---|---|---|---|
| a) 5,43 %ige Lösung in Toluol bei Raumtemperatur | | | | | |
| b) ML 1+4 bei 100°C (DIN 53523) | | | | | |
| c) bei 50°C (DIN 53547). | | | | | |

Aus den Beispielen ist ersichtlich, dass bei Verwendung von Dimethyl-di-2,4-pentadienyl-(E,E)-silan sowohl die Lösungsviskosität als auch der Cold-Flow erniedrigt werden (vergl. Bsp. 2 mit Bsp. 3 bzw. Bsp. 4 mit Bsp. 5a und 5b). Wird dagegen nur eine Katalysatorpräformierung ohne Verwendung von Dimethyl-di-2,4-pentadienyl-(E,E)-silan durchgeführt, so wird zwar die Lösungsviskosität erniedrigt, gleichzeitig jedoch der Cold-Flow erhöht (vergl. Bsp. 2 mit Bsp. 4). Hohe Cold-Flow-Werte sind jedoch für die Lagerung und den Transport von Kautschuken ungünstig.

## Patentansprüche

1. Verfahren zur Herstellung von Polybutadien, **dadurch gekennzeichnet, dass** man eine oder mehrere Polydienyl-Verbindungen mit der allgemeinen Formel
R_{z-y}-X-(-CR₂-CR=CR-CR=CR)_{y} (I)
als Co-Monomer einsetzt,
wobei
R jeweils unabhängig voneinander für einen Rest ausgewählt aus der Gruppe H, C₁-C₂₀-Alkyl, C₆-C₂₀-Aryl und C₇-C₂₀-Alkylaryl steht, der seinerseits einfach- oder mehrfach ungesättigt oder gesättigt sein kann,
X für ein Element aus der Gruppe C, Si, Ge, Sn, B, Al, N, P, O, S steht, oder für eine mehrfach substituierte Alkyl- oder Arylverbindung wie -(CR₂)ₙ-, O-(CR₂)ₙ-O-, C₆R₄, -O-Aryl-O-, steht,
wobei
z die zur Absättigung der Valenzen von X notwendige Zahl an Substituenten darstellt,
R die gleiche Bedeutung wie oben hat und
y für eine ganze Zahl größer 2 steht und nicht größer als z ist.

2. Verfahren zur Herstellung von Polybutadien, **dadurch gekennzeichnet, dass** man eine oder mehrere Polydienyl-Verbindungen mit der allgemeinen Formel
R_{z-y}-X-(-CR₂-CR=CR-CR=CR)_{y} (I)
als Co-Monomer einsetzt,
wobei
R jeweils unabhängig voneinander für einen Rest ausgewählt aus der Gruppe H, C₁-C₂₀-Alkyl, C₆-C₂₀-Aryl und C₇-C₂₀-Alkylaryl steht, der seinerseits einfach- oder mehrfach ungesättigt oder gesättigt sein kann,
X für ein Element aus der Gruppe C, Si, Ge, Sn, B, Al, N, P, O, S steht, oder
für eine mehrfach substituierte Alkyl- oder Arylverbindung wie -(CR₂)ₙ-, O-(CR₂)ₙ-O-, C₆R₄, -O-Aryl-O-, steht,
wobei
z die zur Absättigung der Valenzen von X notwendige Zahl an Substituenten darstellt,
R die gleiche Bedeutung wie oben hat und
y = 2 ist.

3. Verfahren gemäß Anspruch 1 oder 2, **dadurch gekennzeichnet, dass** man einen Katalysator auf Basis der Seltenen Erden einsetzt.

4. Verfahren gemäß Anspruch 3, **dadurch gekennzeichnet, dass** man einen präformierten Katalysator auf Basis der Seltenen Erden einsetzt.

5. Verfahren gemäß einem oder mehreren der Ansprüche 1 bis 4, **dadurch gekennzeichnet, dass** man als Co-Monomer Dimethyldi-2,4-pentadienyl-(E,E)-silan einsetzt.

6. Polybutadien herstellbar in einem Verfahren gemäß einem oder mehreren der Ansprüche 1 bis 5.

7. Dimethyldi-2,4-pentadienyl-(E,E)-silan als Zwischenprodukt.

8. Kautschukmischungen enthaltend ein Polybutadien gemäß Anspruch 6.

9. Verwendung der Kautschukmischungen gemäß Anspruch 8 zur Herstellung von Formkörpem aller Art.

10. Verwendung gemäß Anspruch 9 **dadurch gekennzeichnet, dass** der Formkörper ein Reifenbauteil ist.

11. Verwendung der Kautschukmischungen gemäß Anspruch 8 für die Schlagzähmodifikation von Thermoplasten.

12. Verwendung der Kautschukmischungen gemäß Anspruch 8 für Polystyrol und Styrol/Acrylnitril-Copolymere.

## Claims

1. Process for the preparation of polybutadiene, **characterised in that** one or more polydienyl compounds of the general formula
R_{z-y}-X-(-CR₂-CR=CR-CR=CR)_{Y} (I)
is/are used as comonomer,
wherein
R denotes in each case independently of one another a radical selected from the group H, C₁-C₂₀-alkyl, C₆-C₂₀-aryl and C₇-C₂₀-alkylaryl that may in turn be singly or multiply unsaturated or saturated,
X denotes an element from the group C, Si, Ge, Sn, B, Al, N, P, O, S or
denotes a multiply substituted alkyl or aryl compound such as for example -(CR₂)ₙ-, O-(CR₂)ₙ-O-, C₆R₄, -O-aryl-O-,
wherein
z denotes the number of substituents necessary to saturate the valencies of X,
R has the same meaning as above, and
y denotes a whole number greater than 2 and not greater than z.

2. Process for the preparation of polybutadiene, **characterised in that** one or more polydienyl compounds of the general formula
R_{z-y}-X-(-CR₂-CR=CR-CR=CR)_{Y} (I)
is/are used as comonomer,
wherein
R denotes in each case independently of one another a radical selected from the group H, C₁-C₂₀-alkyl, C₆-C₂₀-aryl and C₇-C₂₀-alkylaryl that may in turn be singly or multiply unsaturated or saturated,
X denotes an element from the group C, Si, Ge, Sn, B, Al, N, P, O, S or
denotes a multiply substituted alkyl or aryl compound such as for example -(CR₂)ₙ-, O-(CR₂)ₙ-O-, C₆R₄, -O-aryl-O-,
wherein
z denotes the number of substituents necessary to saturate the valencies of X,
R has the same meaning as above, and
y = 2.

3. Process according to claim 1 or 2, **characterised in that** a catalyst based on rare earth elements is used.

4. Process according to claim 3, **characterised in that** a preformed catalyst based on rare earth elements is used.

5. Process according to one or more of claims 1 to 4, **characterised in that** dimethyldi-2,4-pentadienyl-(E,E)-silane is used as comonomer.

6. Polybutadiene that can be prepared in a process according to one or more of claims 1 to 5.

7. Dimethyldi-2,4-pentadienyl-(E,E)-silane as intermediate product.

8. Rubber mixtures containing a polybutadiene according to claim 6.

9. Use of the rubber mixtures according to claim 8 for preparing all types of moulded articles.

10. Use according to claim 9, **characterised in that** the moulded article is a tyre structural part.

11. Use of the rubber mixtures according to claim 8 for the impact resistance modification of thermoplastics.

12. Use of the rubber mixtures according to claim 8 for polystyrene and styrene/acrylonitrile copolymers.

## Revendications

1. Procédé pour la préparation d'un polybutadiène, **caractérisé en ce que** l'on utilise en tant que comonomères un ou plusieurs dérivés polydiényliques de formule générale
R_{z-y}-X-(-CR₂-CR=CR-CR=CR)_{y} (I),
dans laquelle
les symboles R représentent chacun, indépendamment les uns des autres, H, un groupe alkyle en C₁-C₂₀, aryle en C₆-C₂₀ ou alkylaryle en C₇-C₂₀, chacun d'eux pouvant être mono- ou poly-insaturé ou saturé,
X représente un élément du groupe C, Si, Ge, Sn, B, Al, N, P, O, S, ou bien un motif alkylique ou arylique à plusieurs substituants tel que -(CR₂)ₙ-, O-(CR₂)ₙ-O-, C₆R₄, -O-aryl-O,
pour lequel
z est le nombre de substituants nécessaires pour saturer les valences de X,
R a les significations ci-dessus et
y est un nombre entier supérieur à 2 mais non supérieur à z.

2. Procédé pour la préparation d'un polybutadiène, **caractérisé en ce que** l'on utilise en tant que comonomères un ou plusieurs dérivés polydiényliques de formule générale
R_{z-y}-X-(-CR₂-CR=CR-CR=CR)_{y} (I),
dans laquelle
les symboles R représentent chacun, indépendamment les uns des autres, H, un groupe alkyle en C₁-C₂₀, aryle en C₆-C₂₀ ou alkylaryle en C₇-C₂₀, chacun d'eux pouvant être mono- ou poly-insaturé ou saturé,
X représente un élément du groupe consistant en C, Si, Ge, Sn, B, Al, N, P, O, S, ou bien
un motif alkylique ou arylique à plusieurs substituants tel que -(CR₂)ₙ-, O-(CR₂)ₙ-O-, C₆R₄, -O-aryl-O,
pour lequel
z est le nombre de substituants nécessaires pour la saturation des valences de X,
R a les significations ci-dessus et
y est égal à 2.

3. Procédé selon la revendication 1 ou 2, **caractérisé en ce que** l'on utilise un catalyseur à base de terres rares.

4. Procédé selon la revendication 3, **caractérisé en ce que** l'on utilise un catalyseur à base de terres rares formé au préalable.

5. Procédé selon une ou plusieurs des revendications 1 à 4, **caractérisé en ce que** l'on utilise en tant que comonomère le diméthyldi-2,4-pentadiényl-(E,E)-silane.

6. Polybutadiène préparé par un procédé selon une ou plusieurs des revendications 1 à 5.

7. Le diméthyldi-2,4-pentadiényl-(E,E)-silane en tant que produit intermédiaire.

8. Compositions de caoutchoucs contenant un polybutadiène selon la revendication 6.

9. Utilisation des compositions de caoutchoucs selon la revendication 8 pour la fabrication d'objets moulés de tous types.

10. Utilisation selon la revendication 9, **caractérisée en ce que** l'objet moulé consiste en une partie de pneumatique.

11. Utilisation des compositions de caoutchoucs selon la revendication 8 pour la modification de résines thermoplastiques en vue d'apporter la résistance au choc.

12. Utilisation des compositions de caoutchoucs selon la revendication 8 pour le polystyrène et les copolymères styrène/acrylonitrile.
